# DEMANDE DE BREVET EUROPEEN

(11) **EP 4 700 498 A1**
(43) Date de publication de la demande: **25.02.2026**
(21) Numéro de dépôt: 24195208.4
(22) Date de dépôt: 19.08.2024
(51) Int. Cl.: G04B 19/06, G04D 3/00, G04B 19/12

(54) **PROCÉDÉ DE FABRICATION D'UNE ÉBAUCHE DE CADRAN FIXÉE À UNE PLAQUE DE SUPPORT**

(71) Demandeur: ETA SA Manufacture Horlogère Suisse, 2540 Grenchen (CH)
(72) Inventeur: ENGGIST, Yann, 3232 Ins (CH)
(74) Mandataire: ICB SA

(57) **Abrégé**

Un aspect de l'invention concerne un procédé de fabrication d'une ébauche de cadran d'un appareil de mesure monté dans une plaque de support (3a, 3b) comprenant :
- une étape de formation (34) dans une enceinte dudit moule (2) d'une cavité centrale (9a) et de cavités périphériques (9b) définies autour de cette cavité centrale (9a), ladite étape (34) prévoyant un agencement (35) de la plaque de support (3a, 3b) dans cette enceinte formée par un assemblage réversible de première et deuxième pièces (7a, 7b) de ce moule (2) ;
- une étape de construction (36) de ladite ébauche de cadran (4a, 4b) dans la cavité centrale (9a) et d'éléments d'attache (10) dans les cavités périphériques (9b), et
- une étape de retrait (40) de la plaque de support (3a, 3b) dudit moule (2) la plaque comportant l'ébauche de cadran (4a, 4b) et les éléments d'attaches construits lesquels d'éléments d'attache (10) assurant la fixation de ladite ébauche (4a, 4b) dans ladite plaque (3a, 3b).

## Description

### Domaine technique de l'invention

L'invention porte sur un procédé et un système de fabrication d'une ébauche cadran d'un appareil de mesure montée dans une plaque/bande de support.

### Arrière-plan technologique

Dans le cadre de la fabrication de cadrans d'un appareil de mesure tel qu'une montre, des ébauches sont classiquement réalisées avant de subir ensuite des opérations de finalisation pour l'obtention de ces cadrans. Pour des cadrans fabriqués en grandes séries, ou afin de réduire les coûts de production, ces ébauches sont construites dans des moules à partir de procédés d'injection de matière.

Plus précisément, cette matière est injectée dans l'enceinte du moule en un point d'injection situé au centre de l'ébauche qui doit y être construite. Une telle ébauche est ensuite extraite de cette enceinte en étant séparée de parties constitutives ne devant pas figurer sur le cadran à obtenir. Cette séparation est réalisée généralement par découpage, étampage ou encore usinage à l'aide d'outils coupants et a pour inconvénient de représenter un risque de détérioration de cette ébauche qui ne correspondra pas au cadran à fabriquer ou encore de souiller cette ébauche qui viendrait par conséquent complexifier la mise oeuvre des opérations de finition à réaliser.

Dans ce contexte, on comprend qu'il existe donc un besoin de développer des solutions alternatives ne présentant pas les inconvénients cités ci-dessus.

### Résumé de l'invention

Le but de la présente invention est de pallier en tout ou partie les inconvénients cités précédemment en proposant un procédé et un système permettant de fabriquer une ébauche de cadran comprise dans une plaque de support permettant ainsi de simplifier la manipulation de cette ébauche durant son extraction du moule et aussi durant la réalisation des opérations de finalisation qu'elle doit subir.

Dans ce dessein, un des aspects de l'invention porte sur un procédé de fabrication d'une ébauche de cadran d'un appareil de mesure monté dans une plaque de support comprenant :
- une étape de formation dans une enceinte dudit moule d'une cavité centrale et de cavités périphériques définies autour de cette cavité centrale, ladite étape prévoyant un agencement de la plaque de support dans cette enceinte formée par un assemblage réversible de première et deuxième pièces de ce moule ;
- une étape de construction de ladite ébauche de cadran dans la cavité centrale et d'éléments d'attache dans les cavités périphériques, et
- une étape de retrait de la plaque de support dudit moule la plaque comportant l'ébauche de cadran et les éléments d'attaches construits lesquels d'éléments d'attache assurant la fixation de ladite ébauche dans ladite plaque.

Dans d'autres modes de réalisation :
- lors de l'agencement de la plaque de support dans ladite enceinte une ouverture centrale et des trous traversants de ladite plaque sont agencés respectivement en regard d'une empreinte centrale et d'empreintes périphériques définies dans une face interne de la première pièce, ladite face participant à délimiter ladite enceinte du moule ;
- lors de l'agencement de la plaque de support dans ladite enceinte des orifices de sortie d'un circuit d'injection de matière compris dans une face de réception plane de la deuxième pièce sont connectés chacun à un trou traversant de ladite plaque ;
- lors de l'étape de construction une injection de matière est effectuée dans les cavité centrale et cavités périphériques du moule par des orifices de sortie compris dans la face de réception de la deuxième pièce ;
- lors de cette injection la matière pénètre d'abord dans chaque cavité périphérique jusqu'à atteindre la cavité centrale où elle s'accumule en formant l'ébauche de cadran ;
- une fois l'ébauche de cadran construite, la matière injectée continue de s'écouler par les orifices de sortie en s'accumulant dans chaque cavité périphérique afin de former l'élément d'attache pourvu d'une partie de jonction sécable la reliant à ladite ébauche de cadran ;
- l'étape de construction comprend une réalisation d'un point d'injection dans une interface située entre un orifice de sortie compris dans une face de réception de la deuxième pièce et un trou traversant de la plaque ;
- l'étape de construction comprend une régulation de la température de l'enceinte mettant en oeuvre une opération de refroidissement de cette enceinte lorsque l'injection de matière dans ladite enceinte est achevée ;
- l'étape de retrait comprend un désassemblement des première et deuxième pièces l'une de l'autre ;
- l'étape de retrait prévoit une rupture du point d'injection configurant une base d'une extrémité de chaque élément d'attache à fleur de la face inférieure de la plaque de support ;
- le procédé comprend une étape de conception de la plaque de support prévoyant la réalisation dans l'épaisseur du corps de cette plaque de l'ouverture centrale traversante et de plusieurs trous traversants localisés en périphérie de cette ouverture ;
- le procédé comprend une étape d'élaboration d'une empreinte centrale et des empreintes périphériques dans la première pièce à partir d'au moins une pièce originale configurée pour la réalisation de ces dites empreintes dans la face interne de cette première pièce, et
- ledit appareil de mesure est une montre.

L'invention concerne aussi un système de fabrication d'une ébauche de cadran d'un appareil de mesure monté dans une plaque de support mettant en oeuvre ledit procédé, le système comprenant un moule comportant une enceinte incluant une cavité centrale et des cavités périphériques définies autour de cette cavité centrale, ladite enceinte étant formée par un assemblage réversible de première et deuxième pièces de ce moule lesdites pièces étant configurées pour recevoir ladite plaque de support, lesdites cavités centrale et périphériques étant configurées pour la construction de l'ébauche de cadran et d'éléments d'attache assurant la fixation de ladite ébauche à ladite plaque.

### Brève description des figures

Les buts, avantages et caractéristiques de la présente invention ressortiront plus clairement de la description détaillée qui suit, faite en liaison avec les figures annexées listées ci-dessous :
- la figure 1 est une représentation d'un système de fabrication d'une ébauche de cadran d'un appareil de mesure, fixée sur une plaque/bande de support, selon un mode de réalisation de l'invention ;
- la figure 2 est une représentation d'une plaque de support sans l'ébauche de cadran qui est susceptible d'y être fixée, selon le mode de réalisation de l'invention ;
- la figure 3 est une vue en coupe d'une partie d'un moule du système dans lequel la plaque de support est susceptible d'être agencée, selon le mode de réalisation de l'invention ;
- les figures 4 et 5 sont des représentations de la plaque de support comprenant un unique logement dans lequel est comprise l'ébauche de cadran construite qui est reliée par des éléments d'attache à cette plaque, selon le mode de réalisation de l'invention ;
- les figures 6 et 7 sont des représentations de la plaque de support comprenant un unique logement dans lequel est comprise une variante de l'ébauche de cadran comprenant une ouverture traversante qui est reliée par des éléments d'attache à cette plaque, selon le mode de réalisation de l'invention ;
- la figure 8 est une représentation de la plaque de support comprenant plusieurs logements incluant chacun une ébauche de cadran, selon le mode de réalisation de l'invention, et
- la figure 9 est un logigramme relatif à un procédé de fabrication de l'ébauche de cadran montée sur la plaque de support, selon le mode de réalisation de l'invention.

### Description détaillée de l'invention

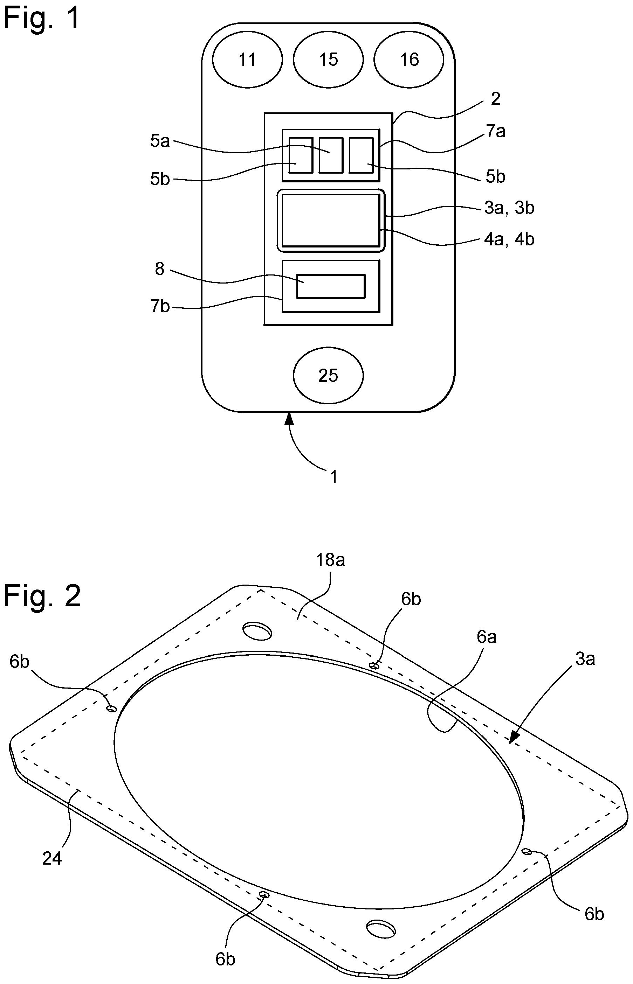

La figure 1 montre une représentation schématique d'un système 1 de fabrication d'au moins une ébauche cadran 4a, 4b d'un appareil de mesure tel qu'une montre ou encore une jauge, ladite ébauche 4a, 4b étant montée/fixée dans une plaque de support 3a, 3b. On comprend qu'il peut aussi s'agir d'un système 1 de fabrication d'une plaque de support 3a, 3b comprenant une ébauche de cadran 4a, 4b fixée en son sein.

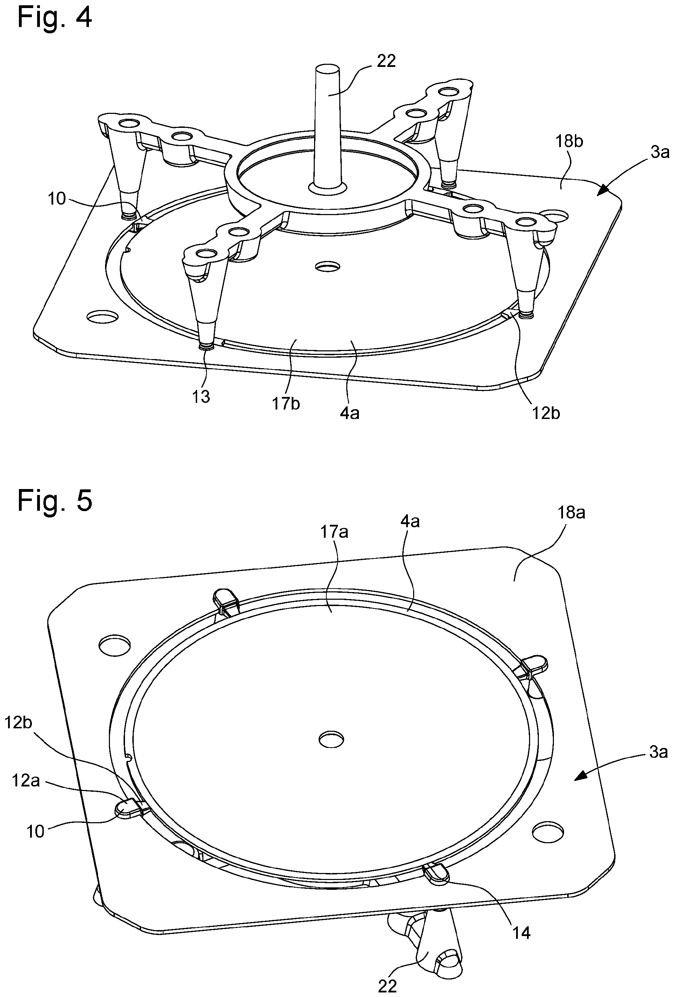

Dans ce système 1, chaque ébauche de cadran 4a, 4b représentée sur les figures 4 à 8, comprend des faces visible et cachée. L'ébauche de cadran 4a, 4b comprend également une paroi latérale périphérique reliant ces faces visible et cachée entre elles. On notera que la face visible 17a de cette ébauche 4a, 4b correspond à la face 17a qui peut être vue par l'utilisateur de l'appareil de mesure, par exemple le porteur de la montre, lorsque le cadran résultant de cette ébauche 4a, 4b, est monté dans cet appareil de mesure. Autrement dit cette face de l'ébauche est dite « *visible* » en référence à la possibilité qu'elle a de pourvoir être vue lorsque le cadran issu de cette ébauche 4a, 4b, est monté dans l'appareil de mesure et ce, contrairement à l'autre face 17b de l'ébauche 4a, 4b qui est opposée à cette face visible 17a.

Un tel système 1 est apte à être mis en oeuvre au sein d'une installation automatique d'assemblage (ou chaîne d'assemblage automatique) dédiée à la fabrication d'un cadran ou plus généralement à la fabrication de tout ou partie de l'appareil de mesure. En pareil contexte, ce système 1 participe à fabriquer et à assurer la fourniture d'ébauche de cadran 4a, 4b montée/fixée dans la plaque de support 3a, 3b au sein de cette installation d'assemblage automatique. Cette plaque 3a, 3b peut être ensuite manipulée pour être agencée dans un autre système de cette installation tel qu'un système de finition d'ébauche de cadran 4a, 4b pour obtenir ledit cadran à monter dans l'appareil de mesure.

En référence aux figures 1 à 3, ce système 1 comprend de manière non exhaustive et non limitative :
- un moule 2 formé par l'assemblage réversible d'une première pièce 7a avec une deuxième pièce 7b, ce moule étant susceptible de recevoir la plaque de support 3a, 3b encore appelée bande ou bande de support, susceptible d'accueillir au moins une ébauche de cadran 4a, 4b ;
- un dispositif d'injection 11 d'une matière injectable dans ce moule 2 ;
- un dispositif de mise sous vide 15 dudit moule 2 et/ou un dispositif de régulation 16 de la température au sein de ce moule 2 ;
- un dispositif de retrait et d'agencement 25 de la plaque de support 3a, 3b ;

Dans ce système 1, le moule 2 comprend une enceinte formée par l'assemblage de la première pièce 7a avec la deuxième pièce 7b, et dans laquelle est susceptible d'être agencée la plaque de support 3a, 3b.

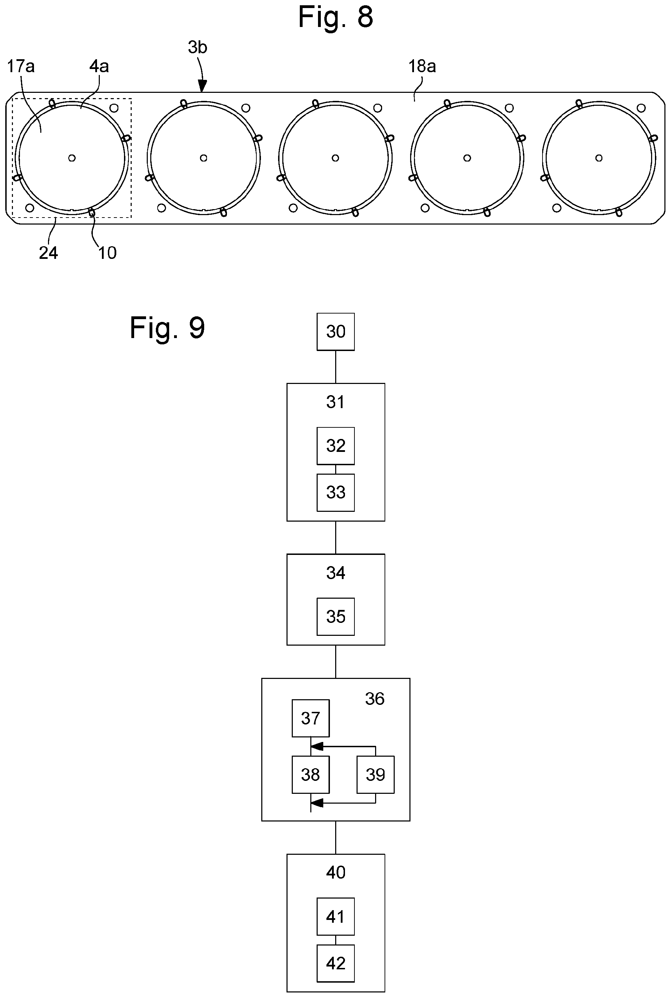

La plaque de support 3a, 3b est une pièce monobloc pouvant comprendre un unique logement 24 susceptible d'accueillir l'ébauche de cadran 4a, 4b tel que l'illustrent les figures 4 à 7 ou plusieurs logements 24 de préférence similaires comme cela est visible sur la figure 8.

Pour une meilleure compréhension de la présente invention, nous décrirons par la suite le système 1 de fabrication de l'ébauche 4a, 4b comprise dans une plaque de support 3a pourvue d'un unique logement 24, le système restant similaire lorsque la plaque 3b comprend plusieurs logements 24. Ce logement 24, encore appelé compartiment, est donc la partie de la plaque 3a, 3b comportant l'ébauche du cadran 4a, 4b construite à partir du système 1.

Cette plaque de support 3a, 3b comprend des faces supérieure et inférieure 18a, 18b planes et opposées entre elles. Dans cette configuration, chaque logement 24 comprend une ouverture centrale 6a traversante circonscrite par une partie périphérique de cette plaque 3a, 3b, cette partie comprenant plusieurs trous traversants 6b. Dans cette configuration, on comprend que ces trous 6b sont localisés en périphérie de cette ouverture centrale 6a. Ces ouvertures 6a et trous 6b débouchent sur les faces supérieure et inférieure 18a, 18b de cette plaque 3a, 3b. On notera que chaque logement 24 comprend au moins deux trous traversants 6b et de préférence quatre trous traversants 6b comme cela est visible sur les figures 2 et 8.

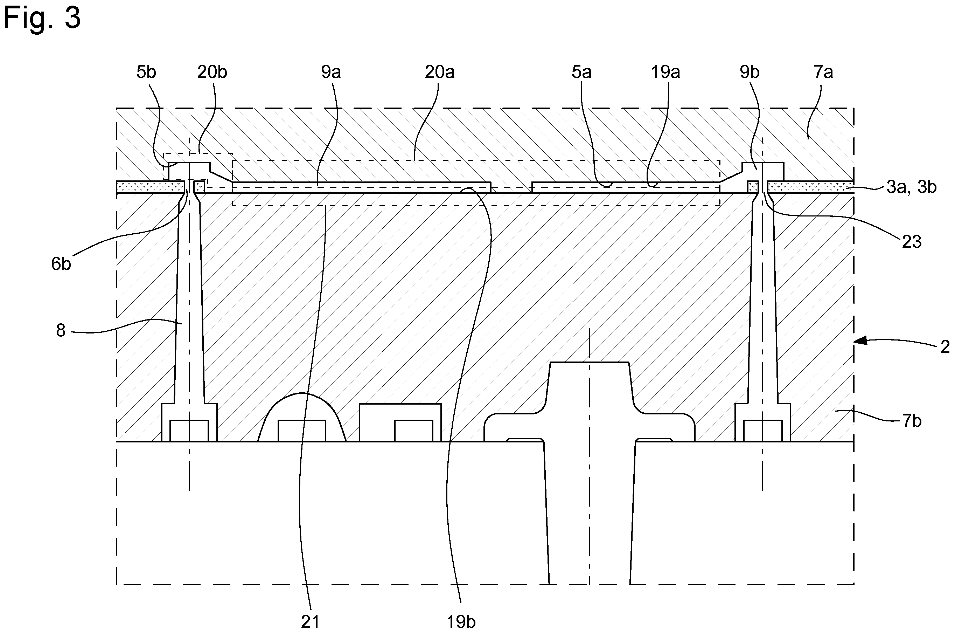

En référence à la figure 3, dans ce moule 2, la deuxième pièce 7b comprend une face de réception 19b pour recevoir une telle plaque de support 3a, 3b. Cette face de réception 19 est de préférence plane mais peut comprendre au moins une cavité ou une contreforme ou encore au moins une protubérance ou un relief. Plus précisément, la plaque de support 3a, 3b est montée sur la face de réception 19b de la deuxième pièce 7b de manière que la face cachée 17b de l'ébauche de cadran 4a, 4b qui sera construite soit agencée en regard voire au contact de tout ou partie de cette face de réception 19b. Dans cette configuration, la face visible 17a de l'ébauche de cadran 4a, 4b qui sera construite sera quant à elle positionnée en tout ou partie en regard et/ou au contact d'une face interne 19a de la première pièce 7a. Autrement dit, la plaque de support 3a, 3b, et donc l'ébauche de cadran 4a, 4b, est agencée dans l'enceinte de ce moule 2 en étant prise en sandwich entre les première et deuxième pièces 7a, 7b de ce moule 2.

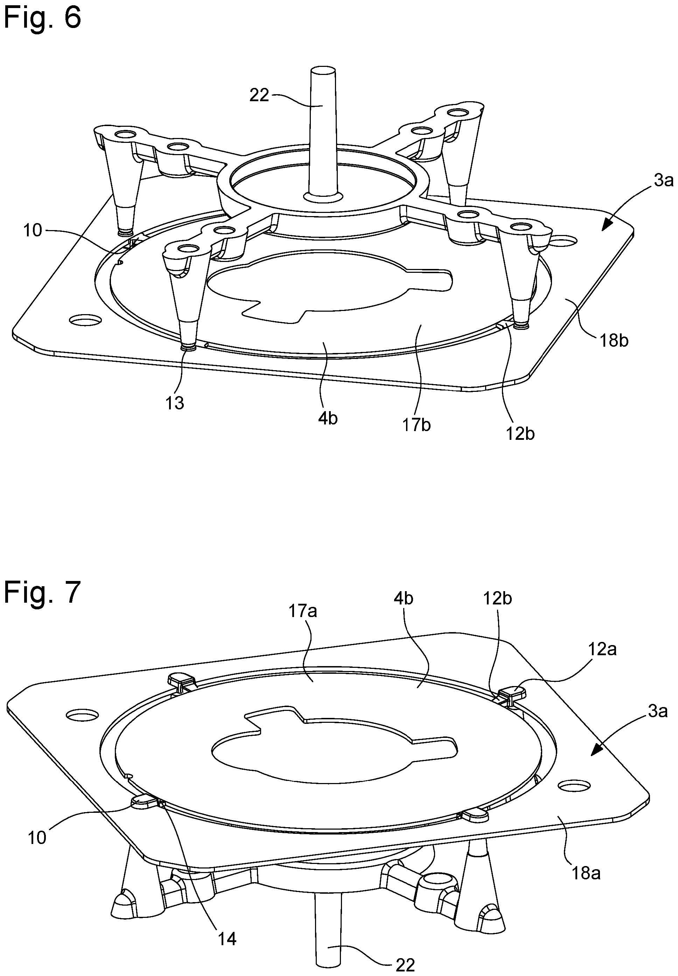

La face interne 19a de cette première pièce 7a du moule 2 comprend une portion centrale 20a et une portion périphérique 20b. La portion centrale 20a de cette face interne 19a est définie pour être agencée en regard d'une zone centrale 21 de la face de réception 19b de la deuxième pièce 7b. Cette portion centrale 20a et la zone centrale 21 présentent des aires qui sont similaires, et inférieures à celle de l'ouverture centrale 6a de la plaque de support 3a. Cette portion centrale 20a comprend une unique empreinte 5a, appelée aussi empreinte centrale 5a. Cette empreinte centrale 5a est configurée pour :
- définir (ou tout du moins participer à définir) différentes caractéristiques de l'ébauche de cadran 4a, 4b telles que sa forme générale, la forme de sa section axiale et/ou transversale, son épaisseur, et/ou
- structurer (ou tout du moins participer à structurer) la face visible 17a de l'ébauche de cadran 4a, 4b qui sera construite, en créant au moins un motif, au moins un relief, au moins un creux, au moins une découpe et/ou en réalisant au moins une ouverture borgne, voire débouchante dans l'épaisseur de l'ébauche de cadran 4a, 4b (visible sur les figures 6 et 7).

Autrement dit, cette empreinte centrale 5a peut par exemple présenter au moins une forme creuse et/ou au moins un relief ou une protubérance. La portion centrale 20a de la face interne 19a de cette première pièce 7a et la zone centrale 21 de la face de réception 19b de la deuxième pièce 7a, forment ensemble une cavité centrale 9a du moule 2 dans laquelle est construite/réalisée l'ébauche de cadran 4a, 4b.

S'agissant de la portion périphérique 20b de la face interne 19a, elle est de préférence plane et comprend plusieurs empreintes 5b appelées aussi empreintes périphériques 5b. De telles empreintes 5b sont configurées pour participer à la construction/réalisation des éléments d'attache 10 de l'ébauche de cadran 4a, 4b à la plaque de support 3a. De préférence chaque empreinte 5b est configurée pour former un élément d'attache 10 constitué de deux parties : une partie d'ancrage 12a avec la plaque de support 3a et une partie de liaison 12b entre cette partie d'ancrage 12a et la paroi latérale de l'ébauche de cadran 4a, 4b. La coopération entre la portion périphérique 20b de la face interne 19a de cette première pièce 7a, la face de réception 19b de la deuxième pièce 7b et la plaque de support 3a, contribue à former plusieurs cavités périphériques 9b dans ce moule 2 dans chacune desquelles est construit/réalisé l'élément d'attache 10. On notera que chacune des cavités périphériques 9b comprend le trou traversant 6b ménagé dans la partie périphérique de la plaque 3a, 3b. Ce moule 2 comprend autant de cavités périphériques 9b que la partie périphérique de la plaque 3a, 3b comporte de trous traversants 6b. On notera que lorsque la plaque de support 3a, 3b est agencée dans ce moule 2, chacun de ces trous traversants 6b est positionné en regard d'un orifice de sortie 23 d'un circuit d'injection 8 défini en tout ou partie dans le corps de la deuxième pièce 7b. Autrement dit, cette face de réception 19b de la deuxième pièce 7b comporte autant d'orifices de sortie 23 que la plaque de support 3a, 3b comporte de trous traversants 6b. Ces orifices 23 sont définis dans une partie périphérique de cette face 19b. Chaque orifice 23 est raccordé au dispositif d'injection 11 de matière injectable, via le circuit d'injection 8 défini dans la deuxième pièce 7b du moule 2.

Dans cette configuration, les orifices de sortie 23 sont dans ce système 1, les seules voies d'injection d'une matière injectable dans l'enceinte du moule 2 afin de construire/réaliser à la fois l'ébauche de cadran 4a, 4b et les éléments d'attache 10. Lorsque cette matière injectable est introduite dans l'enceinte, elle pénètre d'abord dans chaque cavité périphérique 9b en traversant notamment chaque trou traversant 6b jusqu'à atteindre ensuite la cavité centrale 9a. Cette matière s'accumule alors dans la cavité centrale 9a jusqu'à la remplir pour former l'ébauche de cadran 4a, 4b. Une fois l'ébauche 4a, 4b formée, l'injection de la matière se poursuit et cette dernière s'accumule dans chaque cavité périphérique 9b afin de former les éléments d'attache 10. On notera que la régulation de température au sein du moule 2 participant à l'injection de la matière dans son enceinte, est assurée à partir de la circulation d'un fluide de refroidissement ou un fluide de chauffage dans un circuit secondaire compris dans la deuxième pièce 7b. Cette gestion de la température est effectuée par le dispositif de régulation 16 de la température de ce moule 2.

Ainsi que nous l'avons vu dans chaque cavité périphérique 9b est formé l'élément d'attache 10 constitué des deux parties que sont la partie d'ancrage 12a et la partie de liaison 12b. Cette partie de liaison 12b est constituée de la matière injectée solidifiée reliant la paroi latérale de l'ébauche de cadran 4a, 4b à la partie d'ancrage 12a. S'agissant de la partie d'ancrage 12a, elle est constituée d'une première portion qui est surmoulée sur la face supérieure 18a de la partie périphérique de la plaque de support 3a, 3b et d'une deuxième portion qui est comprise dans le trou traversant 6b. Ces première et deuxième portions contribuent ensemble à assurer une fixation robuste de l'élément d'attache 10 à la plaque de support 3a, 3b et par extension de l'ébauche de cadran 4a, 4b dans cette même plaque 3a, 3b. On notera que dans cette configuration, l'extrémité de l'élément d'attache 10 construit comprend une partie de jonction sécable 14 qui le relie à la paroi latérale de l'ébauche 4a, 4b de cadran. Cette partie 14 est spécifiquement définie pour être rompue notamment lors d'opération de désolidarisation de l'ébauche de cadran 4a, 4b avec la plaque de support 3a, 3b.

Par ailleurs, dans cette configuration, la portion de matière injectable solidifiée qui est localisée à l'interface entre l'orifice de sortie 23 compris dans la face de réception 19b de la deuxième pièce 7b et le trou traversant 6b correspondant, forme un point d'injection 13. Ce point d'injection 13 présente une section transversale qui est de préférence inférieure à celle du trou traversant 6b et/ou à celle de l'orifice de sortie 23. On comprend donc que cette section de ce point d'injection 13 est inférieure à celle de la deuxième portion de la partie d'ancrage 12a de l'élément d'attache 10. Un tel point d'injection 13 est configuré pour être rompu notamment lors d'opération de désolidarisation de la plaque de support 3a, 3b avec cette deuxième pièce 7b. En effet, ce point d'injection 13 participe au maintien de la plaque de support 3a, 3b, et donc de l'ébauche de cadran 4a, 4b, sur la deuxième pièce 7b en la liant à une carotte 22 formée dans ce moule 2.

On notera que cette carotte 22 qui est visible sur les figues 4 à 7, comprend :
- une première partie formée par la solidification de la matière injectable dans la cavité centrale 9a ;
- une deuxième partie formée par la solidification de la matière injectable dans chaque cavité périphérique 9b ;
- une troisième partie formée par la solidification de la matière injectable dans le circuit d'injection 8 ménagé dans la deuxième pièce 7b.

Ainsi que nous l'avons déjà évoqué, dans ce moule 2, la deuxième pièce 7b est prévue pour être assemblée de manière réversible avec la face inférieure 18b de la plaque de support 3a, 3b. Cette deuxième pièce 7b comprend ledit au moins un circuit d'injection 8 de matière injectable relié en une première extrémité au dispositif d'injection 11 et en chaque deuxième extrémité comportant l'orifice de sortie 23 à chaque trou traversant de la plaque de support 3a. On comprend ici que le circuit d'injection 8 comprend autant de deuxièmes extrémités qu'il comprend d'orifices de sortie 23 ménagés dans la face de réception 19b de la deuxième pièce 7b. On notera que lorsque le système 1 est pourvu du dispositif de mise sous vide 15 dudit moule 2. Ce dispositif 15 est configuré pour provoquer un vide d'air dans l'enceinte du moule 2 comprenant la cavité centrale 9a et les cavités périphériques 9b. Dans cette configuration et ainsi que nous l'avons évoqué précédemment, une des fonctions de la deuxième pièce 7b est d'assurer l'acheminement de la matière injectable vers chaque cavités 9a, 9b et de participer le cas échéant à les mettre sous vide.

Dans ce système 1, la matière injectable utilisée est par exemple une matière organique et/ou composite, ou une matière métallique ou céramique ou encore une matière thermodéformable, thermodurssissable, ou thermoplastique. À titre d'exemples cette matière peut comprendre les éléments suivants :
- plastique chargé type SLN (phosphorescent) et pigments de couleur et/ou fluorescent ;
- polymère chargé en céramique avec et sans pigment de couleur ;
- un additif permettant de donner un aspect métallique/brillant, type poudre en aluminium, poudre métallique ;
- additif permettant de rendre conducteur le polymère (pour des raisons techniques ou pour un post traitement chimique/galvanique ou autre) ;
- additif donnant un rendu esthétique recopiant un matériau (nacre, pierre...) ;
- additif donnant des caractéristiques mécaniques et/ou tribologiques particulières ;
- BMG plus connue sous l'acronyme « Bulk Metallic Glass » ;
- matière inoxydable ;
- matière métallique frittable ;
- céramique ;
- silicon, et/ou
- combinaison d'un ou l'autre de ces éléments entre eux ou plusieurs de ces derniers entre eux.

En référence à la figure 9, ce système 1 met en oeuvre un procédé de fabrication de l'ébauche de cadran 4a, 4b de l'appareil de mesure monté dans la plaque de support 3a, 3b ou encore fixée à cette dernière. Autrement dit, ce système 1 est configuré pour la mise en oeuvre de ce procédé de fabrication de cette plaque de support 3a comprenant cette ébauche de cadran 4a, 4b de l'appareil de mesure.

Ce procédé comprend une étape de conception 30 de cette plaque de support 3a, 3b ladite étape 30 comportant la réalisation de l'ouverture centrale 6a traversante dans l'épaisseur du corps de cette plaque de support 3a, 3b, ainsi que des trous traversants 6b localisés en périphérie de cette ouverture 6a. On notera que lors de cette étape 30, la plaque 3a, 3b est sélectionnée parmi des plaques fabriquées en métal, en alliage métallique et/ou en polymères.

Le procédé comprend aussi une étape d'élaboration 31 de l'empreinte centrale 5a et des empreintes périphériques 5b dans la première pièce 7a à partir d'au moins une pièce originale destinée à ou participant à la réalisation de ces dites empreintes 5a, 5b dans la face interne 19a de cette première pièce 7a. Dans ce contexte, cette étape 31 prévoit la réalisation d'autant d'empreintes périphériques 5b que de trous traversants 6b compris dans la plaque de support 3a.

Cette pièce originale autrement appelée « *master* » comprend une portion centrale 20a visant à réaliser l'empreinte centrale 5a. Cette portion centrale 20a a une forme similaire à celle de l'ébauche de cadran 4a, 4b qui sera réalisée/construite. Une telle portion comprend également une zone dont la surface est similaire à celle de la face visible 17a attendue/souhaitée pour cette ébauche de cadran 4a, 4b. Cette pièce originale comprend aussi une portion périphérique pourvue de zones prévues pour la réalisation des empreintes périphériques 5b. Ces zones ont chacune une forme similaire à celle d'un élément d'attache 10 participant à relier l'ébauche de cadran 4a, 4b construite à la plaque de support 3a, 3b. On notera que dans un mode de réalisation de l'invention, la mise en oeuvre de cette étape 31 peut requérir autant de pièces originales qu'il y a d'empreintes 5a, 5b à réaliser.

Dans ce contexte, l'étape d'élaboration 31 comprend une sous-étape de conception 32 de ladite pièce originale mise en oeuvre à partir d'une technique de lithographie. Cette technique de lithographie est choisie parmi les techniques suivantes connues de l'état de la technique et qui ne sont pas décrites plus en détail ici : lithographie optique par projection d'ultraviolet, lithographie optique par projection UV, MUV ou DUV, lithographie à immersion, lithographie double exposition, lithographie extrême ultra-violet, lithographie par nanoimpression. On notera que d'autres techniques peuvent être mises en oeuvre en complément ou en remplacement de la technique de lithographie, par exemple la technique d'ablation laser.

Cette étape d'élaboration 31 comprend ensuite une sous-étape de réplication 33 de la pièce originale par la reproduction d'une forme négative de cette pièce originale. Cette sous-étape 33 prévoit en particulier la mise en oeuvre de techniques de réplication du type Ni shims ou BMG (sigle de «°Bulk Metallic Glass ») connues de l'état de la technique et qui ne sont pas décrites plus en détail ici.

Par la suite, le procédé comporte une étape de formation 34 de la cavité centrale 9a et des cavités périphériques 9b dans l'enceinte dudit moule 2. Ces cavités périphériques 9b sont définies autour de cette cavité centrale 9a ou dans son pourtour. Cette étape 34 comprend une sous-étape d'agencement 35 de la plaque de support 3a,3b dans cette enceinte formée par l'assemblage réversible des première et deuxième pièces 7a, 7b de ce moule 2.

Lors de cette sous-étape 35, la plaque de support 3a, 3b est positionnée sur la face de réception 19b de la deuxième pièce 7b. Le positionnement de la plaque 3a, 3b est effectué de sorte que chaque orifice de sortie 23 de la deuxième extrémité correspondante du circuit d'injection 8 soit relié/connecté à un trou traversant 6b correspondant de la plaque de support 3a, 3b. Une telle sous-étape 35 contribue à réaliser une connexion optimale entre chaque orifice de sortie 23 et chaque trou traversant 6b correspondant de la plaque de support 3a, autrement dit, le trou traversant 6b qui est prévu pour coopérer avec cet orifice de sortie 23. On comprend que ce circuit 8 comporte autant d'orifices de sortie 23, et donc de deuxièmes extrémités, que la plaque de support 3a, 3b comprend de trous traversants 6b. Lors de cette sous-étape 35, la face supérieure 18a de la plaque 3a, 3b coopère avec les empreintes centrale et périphériques 5a, 5b définies dans la face interne 19a de la première pièce 7a pour participer à l'élaboration/la formation de l'ébauche de cadran 4a, 4b et des éléments d'attache 10 de cette ébauche 4a, 4b à cette plaque support 3a, 3b. On notera que dans cette configuration l'ouverture centrale 6a de la plaque 3a, 3b est positionnée en regard de l'empreinte centrale 5a et les trous traversants 6b en vis-à-vis des empreintes périphériques 5b.

Le procédé comprend ensuite, une étape de construction 36 de ladite ébauche de cadran 4a, 4b dans la cavité centrale 9a et des éléments d'attache 10 dans les cavités périphériques 9b. Cette étape 36 comprend une sous-étape d'injection 38 de matière dans l'enceinte du moule 2. Lors de cette sous-étape 38, la matière est injectée dans la cavité centrale 9a et les cavités périphériques 9b de cette enceinte. Cette matière est injectée dans l'enceinte par l'intermédiaire de chaque orifice de sortie 23 du circuit 8 compris dans la face de réception 19b de la deuxième pièce 7b. Plus précisément, cette matière pénètre d'abord dans chaque cavité périphérique 9b et ce, en étant injectée via chaque orifice 23 dans le trou traversant 6b correspondant de cette cavité 9b jusqu'à atteindre la cavité centrale 9a où cette matière s'accumule de sorte à remplir cette cavité centrale 9a pour former/construire l'ébauche de cadran 4a, 4b.

Une fois cette ébauche de cadran 4a, 4b formée, la matière continue de s'écouler en provenance de chacun de ces orifices de sortie 23 en s'accumulant cette fois-ci dans chaque cavité périphérique 9b jusqu'à la remplir afin de former l'élément d'attache 10. Dans ce contexte, la partie d'ancrage 12a de l'élément d'attache 10 est constituée de sa première portion qui est surmoulée sur la face supérieure 18a de la partie périphérique de la plaque de support 3a et de sa deuxième portion qui est quant à elle formée dans le trou traversant 6b. S'agissant de la partie de liaison 12b de cet élément d'attache 10, elle est formée de manière à s'étendre sensiblement ou strictement perpendiculairement à la paroi latérale périphérique de l'ébauche de cadran 4a, 4b construite. Chaque partie de liaison 12b ainsi construite comprend la partie de jonction sécable 14 la connectant/reliant à cette paroi latérale périphérique.

On notera que lors de la mise en oeuvre de cette étape 36, une régulation de température au sein du moule 2 est effectuée. Cette régulation de température participe à l'injection de la matière dans son enceinte et ce, à partir de la gestion de la circulation d'un fluide de refroidissement ou d'un fluide de chauffage dans un circuit secondaire compris dans la deuxième pièce 7b. Cette régulation est effectuée par le dispositif de régulation 16 de la température de ce moule 2. Ainsi, la matière injectée vient alors occuper tout le volume défini dans la cavité centrale 9a et les cavités périphériques 9b de cette enceinte.

On notera que lors de cette sous-étape d'injection 38, une réalisation du point d'injection 13 dans l'interface située entre chaque orifice de sortie 23 compris dans la face de réception 19b de la deuxième pièce 7b et le trou traversant 6b de la plaque 3a, 3b. Ainsi que nous l'avons déjà évoqué, ce point d'injection 13 relie l'extrémité de chaque élément d'attache 10 construit à l'extrémité de la carotte 22 comprise dans l'orifice de sortie 23 correspondant.

En conséquence, une telle étape de construction 36 peut comprendre les sous-étapes suivantes :
- de mise sous vide 37 des cavité centrale 9a et des cavités périphériques 9b avant la réalisation de la sous-étape d'injection 38 de la matière injectable dans ces cavités 9a, 9b, et/ou
- de régulation 39 de la température du moule et donc de ces cavités 9a, 9b durant :
   - une période s'étalant avant le début de la sous-étape d'injection 38 de matière injectable dans l'enceinte jusqu'à la fin de cette sous-étape d'injection 38 de matière, et/ou
   - une période débutant à l'achèvement de cette sous-étape injection 38 en mettant en oeuvre une opération de refroidissement de cette enceinte.

De telles sous-étapes 37, 39 de mise sous vide et de régulation de la température visent à assurer une homogénéité structurelle de l'ébauche de cadran 4a, 4b et des éléments d'attache 10 afin de supprimer la présence de tout défaut susceptible d'être présent dans/sur cette ébauche 3a, 3b et/ou ces éléments d'attache 10. Un tel défaut peut par exemple résider en la présence d'une ligne de soudure sur la face visible 17a de l'ébauche de cadran 4a, 4b suite à la jonction de deux flux d'écoulement de matière injectable dans la cavité centrale 9a.

Lors de la mise en oeuvre de la sous-étape de mise sous vide 37, le fluide présent dans l'enceinte par exemple un gaz comme l'air est alors évacué de cette enceinte avant la réalisation de la sous-étape d'injection 38.

Lors de la réalisation de la sous-étape de régulation 39 de la température du moule chaud de l'enceinte et plus précisément de régulation de la température dans cette enceinte, cette dernière est alors portée à une température qui est supérieure ou sensiblement supérieure à la température de passage d'un état de liquide à un état solide de la matière injectable provenant du dispositif d'injection 11 de cette matière et ce, avant la réalisation de la sous-étape d'injection 38. À titre d'exemple cette température de passage est appelée température de transition vitreuse lorsque cette matière est du thermoplastique. Par la suite, une fois la sous-étape d'injection 38 de la matière injectable réalisée c'est-à-dire achevée, cette sous-étape 39 prévoit une opération de refroidissement de l'enceinte.

Le procédé comprend ensuite une étape de retrait 40 dudit moule 2 de la plaque de support 3a, 3b comprenant l'ébauche de cadran 4a, 4b et les éléments d'attache 10 construits. Cette étape 40 comprend une sous-étape de désassemblement 41 des première et deuxième pièces 7a, 7b l'une de l'autre. Autrement dit, ces première et deuxième pièces 7a, 7b sont dissociées l'une de l'autre. Cette étape de retrait 40 comprend une sous-étape de rupture 42 du point d'injection 13. Ce point d'injection 13 est configuré pour que sa rupture participe/permette d'obtenir une base de l'extrémité de chaque élément d'attache 10 qui est sensiblement à fleur de la face inférieure 18b de la plaque de support 3a, 3b. Lors de cette sous-étape 42, une force est alors appliquée sur la plaque de support 3a, 3b pourvue de cette ébauche de cadran 4a, 4b afin d'engendrer un déplacement en rotation et/ou en translation de cette plaque 3a, 3b relativement aux orifices de sortie 23 et donc relativement à la deuxième pièce 7b et à provoquer ainsi la rupture de chaque point d'injection 13. On notera qu'une fois les points d'injection 13 rompus, l'extrémité maintenant libre de chaque élément d'attache 10, et en particulier de la deuxième portion de sa partie d'ancrage 12a, a une base qui est sensiblement à fleur de la face inférieure 18b de la plaque de support 3a, 3b ou strictement à fleur de cette face inférieure 18b.

Dès lors que la plaque de support 3a, 3b est extraite du moule 2 avec l'ébauche de cadran 4a, 4b construite qui y est solidement fixée, cette plaque 3a, 3b peut alors être librement manipulée sans que cette ébauche se dissocie du corps de cette plaque 3a, 3b. Par exemple, cette plaque 3a, 3b peut être manipulée de manière à être agencée/montée sur un socle de réception du système de finalisation de cette ébauche 4a, 4b. Un tel socle est configuré pour recevoir cette plaque 3a, 3b afin que soit procédé à des opérations de finalisation de cette ébauche de cadran 4a, 4b. On notera que l'agencement de cette plaque 3a, 3b sur ce socle est facilité par la deuxième portion de la partie d'ancrage 12a de chaque élément d'attache qui a une base qui est à fleur de la face inférieure 18b de la plaque de support 3a, 3b. Autrement dit, la plaque de support 3a, 3b comprenant cette ébauche de cadran 4a, 4b, conserve une face inférieure 18b qui reste plane.

À titre d'exemple, un tel système de finalisation peut prévoir :
- la construction, le montage ou l'application d'au moins un motif sur la face externe visible 17a de l'ébauche de cadran 4a, 4b ;
- l'application d'un revêtement sur tout ou partie de ladite ébauche de cadran 4a, 4b par exemple par la réalisation d'un dépôt de matière décorative et/ou fonctionnelle sur cette face visible 17a.

En outre, une fois l'ébauche de cadran 4a, 4b finalisée, cette dernière est alors dissociée de la plaque de support 3a, 3b afin d'être montée dans un appareil de mesure. En effet, l'extrémité de chaque élément d'attache 10 est reliée à l'ébauche de cadran 4a, 4b par la partie de jonction sécable 14 qui est configurée pour se rompre lorsqu'une force est appliquée sur l'ébauche de cadran 4a, 4b pour réaliser une telle dissociation/désolidarisation de cette ébauche de cadran 4a, 4b de la plaque de support 3a, 3b.

### Nomenclature

- 1.: Système de fabrication
- 2.: Moule
- 3a, 3b.: Plaque de support
- 4a, 4b.: Ebauche de cadran
- 5a.: Empreinte centrale
- 5b.: Empreinte périphérique
- 6a.: Ouverture centrale traversante
- 6b.: Trous traversants
- 7a.: Première pièce
- 7b.: Deuxième pièce
- 8.: Circuit d'injection
- 9a.: Cavité centrale
- 9b.: Cavités périphériques
- 10.: Elément d'attache
- 11.: Dispositif d'injection
- 12a.: Partie d'ancrage de l'élément d'attache
- 12b.: Partie de liaison de l'élément d'attache
- 13.: Point d'injection
- 14.: Partie de jonction sécable
- 15.: Dispositif de mise sous vide
- 16.: Dispositif de régulation
- 17a.: Face visible de l'ébauche de cadran
- 17b.: Face cachée de l'ébauche de cadran
- 18a.: Face supérieure de la plaque de support
- 18b.: Face inférieure de la plaque de support
- 19a.: Face interne de la première pièce
- 19b.: Face de réception de la deuxième pièce
- 20a.: Portion centrale de la face interne
- 20b.: Portion périphérique de la face interne
- 21.: Zone centrale de la face de réception
- 22.: Carotte
- 23.: Orifice de sortie du circuit d'injection
- 24.: Logement de la plaque de support
- 25.: Dispositif de retrait et d'agencement

## Revendications

1. Procédé de fabrication d'une ébauche de cadran (4a, 4b) d'un appareil de mesure monté dans une plaque de support (3a, 3b) comprenant :
- une étape de formation (34) dans une enceinte dudit moule (2) d'une cavité centrale (9a) et de cavités périphériques (9b) définies autour de cette cavité centrale (9a), ladite étape (34) prévoyant un agencement (35) de la plaque de support (3a, 3b) dans cette enceinte formée par un assemblage réversible de première et deuxième pièces (7a, 7b) de ce moule (2) ;
- une étape de construction (36) de ladite ébauche de cadran (4a, 4b) dans la cavité centrale (9a) et d'éléments d'attache (10) dans les cavités périphériques (9b), et
- une étape de retrait (40) de la plaque de support (3a, 3b) dudit moule (2) la plaque comportant l'ébauche de cadran (4a, 4b) et les éléments d'attaches construits lesquels d'éléments d'attache (10) assurant la fixation de ladite ébauche (4a, 4b) dans ladite plaque (3a, 3b).

2. Procédé selon la revendication précédente, dans lequel lors de l'agencement (35) de la plaque de support (3a, 3b) dans ladite enceinte une ouverture centrale (6a) et des trous traversants (6b) de ladite plaque (3a, 3b) sont agencés respectivement en regard d'une empreinte centrale (5a) et d'empreintes périphériques (5b) définies dans une face interne (19a) de la première pièce (7a), ladite face (19a) participant à délimiter ladite enceinte du moule (2).

3. Procédé selon l'une quelconque des revendications précédentes, **caractérisé en ce que** lors de l'agencement (35) de la plaque de support (3a, 3b) dans ladite enceinte des orifices de sortie (23) d'un circuit d'injection (8) de matière compris dans une face de réception (19b) plane de la deuxième pièce (7b) sont connectés chacun à un trou traversant (6b) de ladite plaque (3a, 3b).

4. Procédé selon l'une quelconque des revendications précédentes, dans lequel lors de l'étape de construction (36) une injection (38) de matière est effectuée dans les cavité centrale (9a) et cavités périphériques (9b) du moule (2) par des orifices de sortie (23) compris dans la face de réception (19b) de la deuxième pièce (7b).

5. Procédé selon la revendication précédente, dans lequel lors de cette injection (38) la matière pénètre d'abord dans chaque cavité périphérique (9b) jusqu'à atteindre la cavité centrale (9a) où elle s'accumule en formant l'ébauche de cadran (4a, 4b).

6. Procédé selon la revendication précédente, dans lequel une fois l'ébauche de cadran (4a, 4b) construite la matière injectée continue de s'écouler par les orifices de sortie (23) en s'accumulant dans chaque cavité périphérique (9b) afin de former l'élément d'attache (10) pourvu d'une partie de jonction sécable (14) la reliant à ladite ébauche de cadran (4a, 4b).

7. Procédé selon l'une quelconque des revendications précédentes, dans lequel l'étape de construction (36) comprend une réalisation d'un point d'injection (13) dans une interface située entre un orifice de sortie (23) compris dans une face de réception (19b) de la deuxième pièce (7b) et un trou traversant (6b) de la plaque (3a, 3b).

8. Procédé selon l'une quelconque des revendications précédentes, dans lequel l'étape de construction (36) comprend une régulation (39) de la température de l'enceinte mettant en oeuvre une opération de refroidissement de cette enceinte lorsque l'injection de matière dans ladite enceinte est achevée.

9. Procédé selon l'une quelconque des revendications précédentes, dans lequel l'étape de retrait (40) comprend un désassemblement (41) des première et deuxième pièces (7a, 7b) l'une de l'autre.

10. Procédé selon la revendication précédente, dans lequel l'étape de retrait (40) prévoit une rupture (42) du point d'injection (13) configurant une base d'une extrémité de chaque élément d'attache (10) à fleur de la face inférieure (18b) de la plaque de support (3a, 3b).

11. Procédé selon l'une quelconque des revendications précédentes, comprenant une étape de conception (30) de la plaque de support (3a, 3b) prévoyant la réalisation dans l'épaisseur du corps de cette plaque (3a, 3b) de l'ouverture centrale (6a) traversante et de plusieurs trous traversants (6b) localisés en périphérie de cette ouverture (6a).

12. Procédé selon l'une quelconque des revendications précédentes, comprenant une étape d'élaboration (31) d'une empreinte centrale (5a) et des empreintes périphériques (5b) dans la première pièce (7a) à partir d'au moins une pièce originale configurée pour la réalisation de ces dites empreintes (5a, 5b) dans la face interne (19a) de cette première pièce (7a).

13. Procédé selon l'une quelconque des revendications précédentes dans lequel ledit appareil de mesure est une montre.

14. Système (1) de fabrication d'une ébauche de cadran (4a, 4b) d'un appareil de mesure monté dans une plaque de support (3a, 3b) mettant en oeuvre le procédé selon l'une quelconque des revendications 1 à 12, le système (1) comprenant un moule (2) comportant une enceinte incluant une cavité centrale (9a) et des cavités périphériques (9b) définies autour de cette cavité centrale (9a), ladite enceinte étant formée par un assemblage réversible de première et deuxième pièces (7a, 7b) de ce moule (2) lesdites pièces (7a, 7b) étant configurées pour recevoir ladite plaque de support (3a, 3b), lesdites cavités centrale et périphériques (9a, 9b) étant configurées pour la construction de l'ébauche de cadran (4a, 4b) et d'éléments d'attache (10) assurant la fixation de ladite ébauche (4a, 4b) à ladite plaque (3a, 3b).
